(19) **Europäisches Patentamt**
**European Patent Office**
**Office européen des brevets**

(11) **EP 2 994 560 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **14718041.8**

(22) Anmeldetag: **14.04.2014**

(51) Internationale Patentklassifikation (IPC):
**D01F 9/32** *(2006.01)*  **D01D 10/02** *(2006.01)*
**D01D 11/02** *(2006.01)*  **B29C 35/02** *(2006.01)*

(52) Gemeinsame Patentklassifikation (CPC):
**D01F 9/32; D01D 10/02; D01D 11/02;**
**B29C 2035/0211**

(86) Internationale Anmeldenummer:
**PCT/EP2014/057503**

(87) Internationale Veröffentlichungsnummer:
**WO 2014/180630 (13.11.2014 Gazette 2014/46)**

(54) **VERFAHREN UND VORRICHTUNG ZUR VERARBEITUNG VON CARBONFASERSTRÄNGEN**

METHOD AND DEVICE FOR PROCESSING CARBON FIBRE STRANDS

PROCÉDÉ ET DISPOSITIF DE TRAITEMENT DE FAISCEAUX DE FIBRES DE CARBONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2013 DE 102013208426**

(43) Veröffentlichungstag der Anmeldung:
**16.03.2016 Patentblatt 2016/11**

(73) Patentinhaber: **Bayerische Motoren Werke Aktiengesellschaft**
**80809 München (DE)**

(72) Erfinder:
• **MAIDL, Franz**
**94574 Wallerfing (DE)**
• **HOLLMANN, Falco**
**80634 München (DE)**
• **PFITZER, Hanno**
**84095 Furth (DE)**
• **KOHL, Eberhard**
**01689 Weinböhla (DE)**

(56) Entgegenhaltungen:
**EP-A1- 1 783 252  WO-A1-02/30657**
**GB-A- 1 217 170  GB-A- 1 217 170**
**US-A1- 2010 074 834**

• **DD EDIE ET AL: "Thermoplastic Coating of Carbon Fibers", ADVANCES IN THERMOPLASTIC MATRIX COMPOSITE MATERIALS, ASTM INTERNATIONAL, 100 BARR HARBOR DRIVE, PO BOX C700, WEST CONSHOHOCKEN, PA 19428-2959, 1 January 1989 (1989-01-01), pages 50-1, XP009503417, DOI: 10.1520/STP24594S ISBN: 978-0-8031-1272-8**
• **D. D. Edie. ET AL: "Thermoplastic Coating of Carbon Fibers. Annual Report, 1988-1989", NASA CONTRACTOR REPORT., vol. NASA CR-185047, 1 January 1989 (1989-01-01), pages 1-128, XP055373109, US ISSN: 0565-7059 Retrieved from the Internet: URL:https://ntrs.nasa.gov/archive/nasa/cas i.ntrs.nasa.gov/19890015117.pdf>**

EP 2 994 560 B1

**Beschreibung**

Die vorliegende Erfindung betrifft ein Verfahren und eine Vorrichtung zur Verarbeitung von Carbonfasersträngen.

Zur Herstellung von Carbonfaser-Halbzeugen werden sogenannte Rovings, das sind Faserstränge, -bündel oder Multifilamentgarne aus mehreren 1000 bis mehreren 10.000 parallel oder mit geringfügiger Verdrillung (Schutzdrehung zur Verhinderung eines Auseinanderfallens) angeordneten Filamenten (Endlosfasern), verwendet, die auf Spulen, Rollen oder Trommeln gehandelt werden und zur Verarbeitung endlos abgezogen werden. Man spricht dabei von Online-Verfahren im Gegensatz zur diskontinuierlichen Handverlegung. Der Durchmesser jedes Einzelfilaments liegt üblicherweise zwischen 5 und 8 μm.

Oft ist es bei der Online-Verarbeitung von Carbonfasersträngen erforderlich, das Ausgangsprodukt (die Carbonfaser) zu erwärmen und z. T. auf hohe Temperaturen zu bringen. Es ist bekannt, die Erwärmung durch den Einsatz von Öfen, Bunsenbrennern, Heizlampen oder anderen Strahlungsquellen zu bewerkstelligen. Hierbei wird die Faser bei Produktionsgeschwindigkeit durch die Wärmequelle geleitet, wobei durch Variation von Temperatur und Geschwindigkeit die Erwärmung des Fasermaterials eingestellt werden soll. Bei diesen Verfahren ist die Durchwärmung des Fasermaterials jedoch oft nicht hinreichend homogen. Das kann zu Schwankungen entlang des Fertigungsprozesses und somit zu Unterschieden in den Produkteigenschaften des Halbzeugs führen. Auch kann es geschehen, dass der Wärmeeintrag zu punktuell oder insgesamt zu intensiv ist, was zu Schäden an der Faser führen kann. Die Energieeffizienz der genannten Verfahren lässt auch wegen hoher Wärmeverluste zu wünschen übrig.

Aus der GB 1 217 170 A, der US 2010/0074834 A1 und EP 1 783 252 A1 sind Verfahren zur Herstellung von Carbonbauteilen bekannt, gemäß welchen eine Erwärmung der Carbonfasern mittels elektrischem Strom erfolgt. Die Dokumente "Thermoplastic Coating of Carbon Fibers" von D. D. Edie, G. C. Lickfield & Kollegen aus den Veröffentlichungen "Advances in Thermoplastic Matrix Composite Materials, Philadelphia 1989 und dem Jahresbericht 1988 - 1989, "Center for Advanced Engineering Fibers", Clemson University, offenbaren zudem, dass Carbonfasern eines Carbonfaserstrangs vor dem Erwärmen aufgespreizt werden. Das Erwärmen erfüllt den Zweck einer Aufschmelzung eines an den Carbonfasern angeordneten Matrixwerkstoffs.

Eine Aufgabe der vorliegenden Erfindung besteht darin, ein Verfahren und eine Vorrichtung zur Verarbeitung von Carbonfasersträngen zu schaffen, welche die Nachteile des Standes der Technik wenigstens teilweise vermeiden. Insbesondere besteht eine Aufgabe der vorliegenden Erfindung darin, ein gut steuerbares Verfahren und eine Vorrichtung zur Verarbeitung von Carbonfasersträngen zu schaffen, welche eine homogene und sanfte Durchwärmung des Fasermaterials in einem Carbonfaserstrang ermöglicht, sodass auch Faserschäden vermieden werden können. Eine weitere Aufgabe der Erfindung besteht darin, den Energieaufwand für die Erwärmung des Fasermaterials zu reduzieren.

Die vorstehend genannte Aufgabe wird wenigstens in Teilaspekten gelöst durch ein erfindungsgemäßes Verfahren mit den Merkmalen des Anspruchs 1 .

Demnach betrifft die vorliegende Erfindung ein Verfahren zur Erwärmung eines kontinuierlich geförderten Carbonfaserstrangs. Erfindungsgemäß wird vorgeschlagen, dass die Erwärmung durch Zuführung elektrischen Stroms in den Carbonfaserstrang erfolgt. Der Carbonfaserstrang wird vor der Zuführung elektrischen Stroms aufgespreizt. Somit kann eine Kontaktierung des Carbonfaserstrangs verbessert werden, da die Filamente über eine breite Fläche verteilt sind. Ferner erfolgt die Erwärmung auf eine Temperatur, die wenigstens einer Zersetzungstemperatur einer auf Fasern des Carbonfaserstrangs befindlichen Schlichte entspricht. Dadurch kann eine im Anlieferungszustand vorhandene Schlichte entfernt werden, wenn die nachfolgenden Verarbeitungsschritte keine oder eine andere Beschichtung erfordern.

Unter einem Carbonfaserstrang wird ein Strang von nicht oder nur minimal verdrillten Quasi-Endlosfilamenten aus Kohlenstoff verstanden. Wenn die Erwärmung des Carbonfaserstrangs durch Zuführung elektrischen Stroms in den Carbonfaserstrang erfolgt, erfolgt die Temperierung der Filamente aus dem Material von innen heraus, sodass Wärme gleichmäßig und homogen und somit sanft in den Carbonfaserstrang eingebracht werden kann. Der Temperaturgradient in der Faser ist umgekehrt wie bei einer Erwärmung von außen.

Die Erwärmung erfolgt auf eine Temperatur, die wenigstens einer Erweichungstemperatur einer auf Fasern des Carbonfaserstrangs befindlichen Schlichte oder Imprägnierung entspricht. Wenn die Beschichtung der Fasern aufgeweicht (also insbesondere aufgeschmolzen) vorliegt, ist eine nachfolgende Herstellung von Verbundteilen erleichtert, da die Beschichtung beispielsweise ein Matrixmaterial für den Faserverbund enthalten kann.

In einer bevorzugten Weiterbildung wird eine durch die Erwärmung erzielte Endtemperatur des Carbonfaserstrangs durch wenigstens eine der folgenden Maßnahmen gesteuert bzw. geregelt:

- Variieren einer Spannung, unter welcher der elektrische Strom zugeführt wird;
- Variieren eines Vorwiderstands;
- Variieren einer Abzugsgeschwindigkeit des Carbonfaserstrangs
- Variieren eines Abstands von Stromzuführungspunkten.

Somit ist eine einfache Steuerbarkeit gegeben.

Das erfindungsgemäße Verfahren wird vorzugsweise unter Verwendung einer Heizvorrichtung zur Erwärmung eines kontinuierlich geförderten Carbonfaserstrangs durchgeführt. Die Heizvorrichtung ist zur Durchführung des vorstehend beschriebenen Verfahrens ausgebildet.

In einer bevorzugten Ausführungsform weist die Heizvorrichtung eine Spannungsquelle und wenigstens zwei mit jeweiligen Polen der Spannungsquelle verbundene, von der Umgebung isolierte Kontaktelemente aufweist, wobei die Kontaktelemente ausgebildet sind, den Carbonfaserstrang so zu kontaktieren, dass bei Kontaktierung ein geschlossener Stromkreis mit der Spannungsquelle ausgebildet wird. Die Kontaktelemente können eine Kontaktrolle und/oder einen Schleifkontakt aufweisen. Im Sinne der Erfindung kann eine Konkaktwalze auch als Kontaktrolle verstanden werden. Die Kontaktrolle kann nach Bedarf konvex oder konkav ausgebildet sein.

Die Heizvorrichtung weist insbesondere eine Steuereinheit auf, welche ausgebildet ist, die Spannungsquelle anzusteuern.

In einer bevorzugten Weiterbildung der Erfindung ist ein Temperatursensor zur Messung einer Endtemperatur des Carbonfaserstrangs vorgesehen, wobei die Steuereinheit ausgebildet ist, ein Ausgangssignal des Temperatursensors zu empfangen und die Endtemperatur des Carbonfaserstrangs zu regeln durch Anwendung wenigstens eine der nachstehenden Maßnahmen:

- Ansteuern der Spannungsquelle, um eine Ausgangsspannung der Spannungsquelle zu variieren;
- Ansteuern eines variablen Widerstands, um eine Spannung zwischen den Kontaktelementen zu variieren;
- Ansteuern eines Stellantriebs, um einen Abstand von Kontaktelementen zu variieren;
- Ansteuern einer Antriebsvorrichtung, um eine Abzugsgeschwindigkeit des Carbonfaserstrangs zu variieren.

Weitere Merkmale, Aufgaben und Wirkungen der Erfindung ergeben sich aus der Beschreibung und den beigefügten Zeichnungen.

In den Zeichnungen zeigt bzw. zeigen:

Fig. 1 eine schematische Darstellung einer Heizvorrichtung zur bevorzugten Verwendung bei der Durchführung eines Verfahrens gemäß der vorliegenden Erfindung,

Fig. 2 eine schematische Darstellung einer Carbonfaser-Vorverarbeitungsanlage mit Heizvorrichtung zur bevorzugten Verwendung bei der Durchführung eines Verfahrens gemäß der vorliegenden Erfindung,

Fig. 3 eine schematische Darstellung einer weiteren Heizvorrichtung zur bevorzugten Verwendung bei der Durchführung eines Verfahrens gemäß der vorliegenden Erfindung.

Nachstehend werden Ausführungsbeispiele der Erfindung anhand der beigefügten Zeichnungen beschrieben. Dabei sind gleiche oder ähnliche Bauteile in mehreren Figuren jeweils mit den gleichen oder ähnlichen Bezugszeichen versehen. Bauelemente und Merkmale, Zwecke und Wirkungen, die in Bezug auf ein Ausführungsbeispiel beschrieben werden, sind, soweit nicht ausdrücklich oder ersichtlich ausgeschlossen, als in jedem anderen Ausführungsbeispiel anwendbar anzunehmen und sollen auch in Bezug auf das jeweils andere Ausführungsbeispiel als offenbart gelten, auch wenn sie dort nicht ausdrücklich gezeigt und/oder beschrieben werden. Es versteht sich ferner, dass die Zeichnungen als schematisch zu verstehen sind und ihnen keine Einschränkungen im Hinblick auf konkrete Abmessungen oder Größenverhältnisse entnommen werden sollen, es sei denn, dies wäre ausdrücklich so beschrieben.

<Heizvorrichtung mit Rollenkontaktierung>

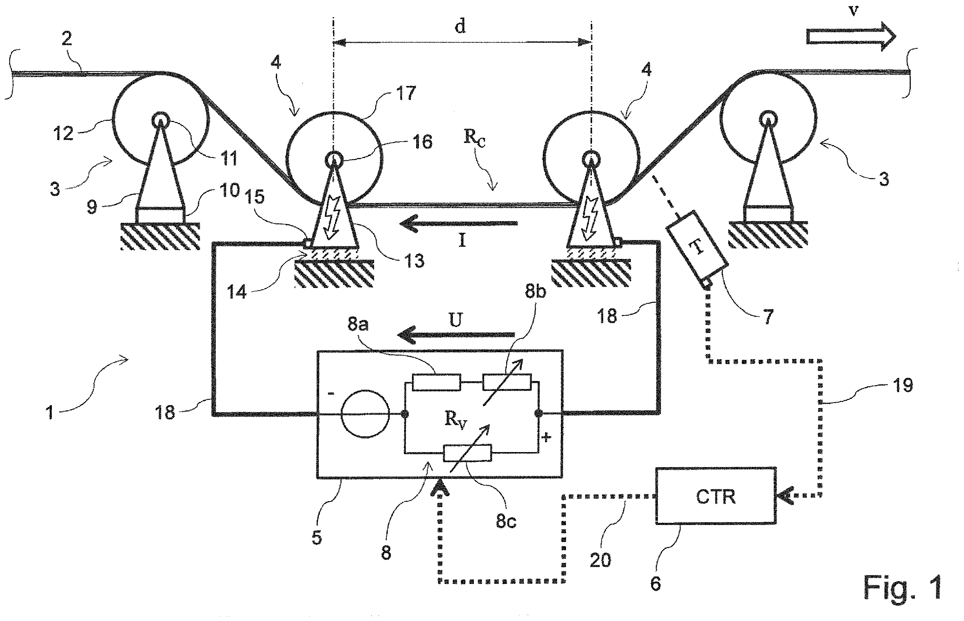

Fig. 1 zeigt eine Heizvorrichtung 1 zur Erwärmung eines Carbonfaserstrangs 2 in einer schematischen Darstellung für die Durchführung eines Verfahrens gemäß der vorliegenden Erfindung. Die Heizvorrichtung 1 ist Teil einer nicht näher dargestellten Fördervorrichtung, die eine oder mehrere Abwicklungsrollen, eine oder mehrere Führungs-, Speicher- und Abzugsrollen aufweist und insbesondere ausgebildet ist, um den Carbonfaserstrang 2 von einer Abwicklungsrolle abzuziehen und mit einer Abzugsgeschwindigkeit v kontinuierlich zu fördern.

Die Heizvorrichtung 1 weist zwei Führungselemente 3, zwei Kontaktierungselemente 4, eine Spannungsquelle 5, eine Steuereinheit 6 und einen Temperatursensor 7 auf.

Die Spannungsquelle 5 weist einen steuerbaren oder regelbaren Vorwiderstand 8 auf und ist ausgebildet, um eine Spannung U bereitzustellen. Der Vorwiderstand 8 ist durch eine Spannungsteilerschaltung verwirklicht, die einen festen Innenwiderstand 8a, einen damit in Reihe geschalteten, variablen Reihenwiderstand 8b und einen mit den Widerständen 8a, 8b parallel geschalteten, variablen Parallelwiderstand 8c auf. Die Spannungsquelle 5 ist ausgebildet, eine ihr vorgegebene Spannung durch Variation des Vorwiderstands 8 (der variablen Widerstände 8b, 8c) zu regeln.

Jedes der Führungselemente 3 weist einen Lagerbock 9 auf, der mittels einer Befestigung 10 an einem nicht näher bezeichneten Anlagengestell oder einem Anlagenboden befestigt ist. Der Lagerbock 9 weist ein Lager 11 auf, welches eine Umlenkrolle 12 drehbar stützt.

Jedes der Kontaktierungselemente 4 weist ein Gehäuse 13 auf, das mittels einer Befestigung 14 an dem Anlagengestell oder Anlagenboden befestigt ist. Die Befestigung 14 ist elektrisch isolierend ausgeführt und kann daher auch als Isolierung 14 bezeichnet werden. An dem Gehäuse 13 ist ferner ein Anschluss 15 zum Anschließen eines Anschlusskabels angebracht. Das Gehäuse 13 weist ein Lager 16 auf, welches eine Kontaktrolle 17 drehbar stützt. Das Kontaktierungselement 4 ist so ausgebildet, dass der Anschluss 15 elektrisch mit der Kontaktrolle 17 verbunden ist. Hierzu können das Gehäuse 13, das Lager 16 und die Kontaktrolle 17 aus einem elektrisch leitenden Material ausgebildet und elektrisch leitend miteinander verbunden sein. Wenn ein potentialführender Anschlusskontakt (nicht näher dargestellt) des Anschlusses 15 dann mit dem Gehäuse 13 verbunden ist, liegt das an dem Anschlusskontakt anliegende Potential auch an der Kontaktrolle 17 an. Alternativ kann ein Schleif-, Gleit-, Roll- oder sonstiger Kontakt (nicht näher dargestellt) an der Kontaktrolle 17 anliegen und mit dem Anschlusskontakt verbunden sein, so dass ebenfalls das an dem Anschlusskontakt 15 anliegende Potential an der Kontaktrolle 17 anliegt.

Jedes der Kontaktierungselemente 4 ist über seinen Anschluss 15 und ein Anschlusskabel 18 mit der Spannungsquelle 5 verbunden. Demnach liegt bei Vernachlässigung von Spannungsverlusten die von der Spannungsquelle 5 bereitgestellte Spannung U zwischen den Kontaktrollen 17 der Kontaktierungselemente 4 an.

Der Carbonfaserstrang 2 ist über die Umlenkrollen 12 und die Kontaktrollen 17 derart geführt, dass der Carbonfaserstrang 2 zwischen den Kontaktrollen 17 frei ist. Eine freie Länge des Carbonfaserstrangs 2 zwischen den Kontaktrollen 17 wird als Kontaktabstand d bezeichnet. Durch hier nicht näher dargestellte Mittel wird der Carbonfaserstrang 2 in Abzugsrichtung (in der Figur von links nach rechts) mit einer Abzugsgeschwindigkeit v kontinuierlich gefördert.

Da der Carbonfaserstrang 2 über die Kontaktrollen 17 geführt und dazwischen frei ist und die in dem Carbonfaserstrang 2 enthaltenen Carbonfasern ein leitfähiges Material sind, ist die Spannungsquelle 5 über den Carbonfaserstrang 2 kurzgeschlossen. Daher fließt ein Strom I von der einen Kontaktrolle 17 durch den Carbonfaserstrang 2 zu der anderen Kontaktrolle 17. Dadurch wird der Carbonfaserstrang 2 zwischen den Kontaktrollen 17 durch den fließenden Strom nach dem Prinzip des Heizdrahts erwärmt.

Die Spannungsquelle 5 erhält über eine Messleitung 19 ein Temperatursignal von dem Temperatursensor 7. Der Temperatursensor 7 ist ohne Beschränkung der Allgemeinheit ein Infarotsensor, der den Carbonfaserstrang 2 stromabwärts des zweiten Kontaktierungselements 4 abtastet und ein der gemessenen Temperatur T des Carbonfaserstrangs 2 entsprechendes Temperatursignal ausgibt. Anhand der gemessenen, durch das Temperatursignal repräsentierten Temperatur T des Carbonfaserstrangs 2 ermittelt das Steuergerät 6 die einzustellende Spannung U und gibt über eine Steuerleitung 20 ein die einzustellende Spannung U repräsentierendes Steuersignal an die Spannungsquelle 5 aus. In einer Ausführungsvariante gibt die Spannungsquelle 5 ein der gelieferten Spannung entsprechendes Spannungssignal an das Steuergerät 6 aus, berechnet das Steuergerät 6 hieraus den einzustellenden Widerstandswert des Vorwiderstands 8 bzw. der variablen Widerstände 8b, 8c und gibt ein dementsprechendes Steuersignal an die Spannungquelle 5 aus. Im Ergebnis wird eine Temperaturregelung derart verwirklicht, dass die Spannung U der Spannungsquelle 5 anhand der gemessenen Temperatur T und eines (an dem Steuergerät 6 manuell einstellbaren oder über eine zentrale Anlagensteuerung vorgebbaren) Sollwerts der Temperatur T variiert wird.

<Vorverarbeitung mit Stromtemperierung>

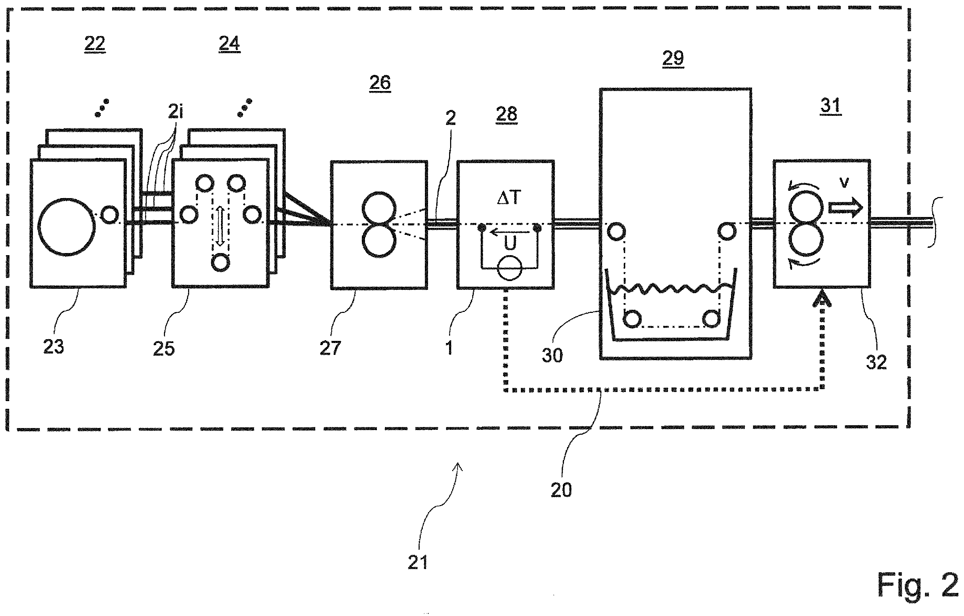

Fig. 2 zeigt eine schematische Blockdarstellung einer Carbonfaser-Vorverarbeitungsanlage 21 für die Durchführung eines Verfahrens gemäß der vorliegenden Erfindung.

Die Carbonfaser-Vorverarbeitungsanlage 21 ist zur Vorverarbeitung und Förderung eines aus mehreren Rovings 2i zusammengeführten Carbonfaserstrangs 2 zur weiteren Zuführung an eine Weiterverarbeitung vorgesehen. Die Weiterverarbeitung kann beispielsweise eine Webvorrichtung zur Vorbereitung eines Gewebes für die Herstellung von Prepregs, eine Pultrusionsvorrichtung zur Herstellung rohrförmiger Halbzeuge, eine Faserschnitzelanlage zur Herstellung von Fasermatten mit Kurz- oder Langfasern, etc. umfassen.

Nachstehend werden die einzelnen Bestandteile der Carbonfaser-Vorverarbeitungsanlage 21 beschrieben.

Eine Spulstation 22 weist eine Vielzahl von Abspulvorrichtungen 23 auf. Jede Abspulvorrichtung 23 trägt eine Spule mit einem Roving 2i.

Die Rovings 2i werden nach Abhaspeln von der jeweiligen Abspulvorrichtung 23 einer Speicherstation 24 zugeführt, in welcher jeder Roving 2i einem Pendelrollenspeicher 25 zugeführt wird. Jeder Pendelrollenspeicher 25 weist mehrere feste Rollen und mindestens eine beweglichen ("pendelnde") Rolle auf und dient dem Ausgleich von Schwankungen in der Abzugsgeschwindigkeit v und der Bereitstellung einer vorbestimmten Faserspannung.

Nach der Speicherstation 24 werden die Rovings 2i einer Faserspreizstation 26 zugeführt. In der Faserspreizstation 26 werden die Rovings zwischen zwei Kalanderwalzen einer Kalandereinheit 27 aufgespreizt und die aufgespreizten Fasern aller Rovings 2i zu einem einzigen bandförmigen Carbonfaserstrang 2 zusammengeführt.

Der Carbonfaserstrang 2 wird nun einer Heizstation 28 zugeführt, die eine Heizvorrichtung 1 wie vorstehend beschrieben aufweist. Durch die Heizvorrichtung 1 wird der Carbonfaserstrang 2 auf eine Temperatur gebracht, die einer Zersetzungstemperatur Tz einer auf den Fasern befindlichen Schlichte entspricht. Dadurch wird die Schlichte von dem Carbonfaserstrang 2 entfernt. Dadurch, dass der Carbonfaserstrang 2 bereits aufgefasert ist und bandförmig zugeführt wird, kann ein guter elektrischer Kontakt der Einzelfilamente mit den Kontaktrollen 12 (vgl. Fig. 1) der Heizvorrichtung 1 verwirklicht werden.

Nach der Entfernung der Faserschlichte in der Temperierstation 28 wird der Carbonfaserstrang 2 einer Imprägnierungsstation 29 zugeführt. Die Imprägnierungsstation 29 weist ein Schlichtbad 30 auf, durch welches der Carbonfaserstrang 2 geführt wird. In dem Schlichtbad 30 werden die Filamente des Carbonfaserstrangs 2 mit einer neuen Schlichte versehen, die an die Weiterverarbeitung angepasst ist. Anstelle des Schlichtebades 30 kann auch eine Sprühvorrichtung zum Besprühen des Carbonfaserstrangs 2 vorgesehen sein.

Nach der Neubeschlichtung in der Imprägnierungsstation 29 wird der Carbonfaserstrang 2 einer Abzugsstation 31 zugeführt, welche eine Antriebsvorrichtung 32 für den Carbonfaserstrang 2 aufweist. Die Antriebsvorrichtung 32 weist ein Antriebsrollenpaar zum Abziehen des Carbonfaserstrangs 2 mit der Abzugsgeschwindigkeit v auf.

Über eine Steuerleitungen 20 kann das Steuergerät 6 (vgl. Fig. 1) auch Steuersignale für die Antriebsvorrichtung 32 zur Variierung der Abzugsgeschwindigkeit v in Abhängigkeit von der erreichten Endtemperatur T des Carbonfaserstrangs 2 erzeugen und ausgeben bzw. senden.

In einer Abwandlung sind anstelle einer einzigen Heizvorrichtung 1 in der Temperierstation 28 mehrere Heizvorrichtung 1 zur einzelnen Temperierung der Carbonfaserstränge 2 vorgesehen. In diesem Fall sind auch mehrere Kalandereinheiten 27 und Abzugsvorrichtungen 32 vorgesehen. Das Imprägnierbad 30 kann dann ebenfalls mehrfach vorhanden sein oder zur Durchleitung mehrerer Carbonfaserstränge 2 eingerichtet sein.

Die Darstellung und vorstehende Beschreibung der Vorbearbeitungsanlage 21 ist für die Zwecke der Erläuterung stark vereinfacht und schematisiert. Die Anordnung der verschiedenen Stationen kann den jeweiligen Erfordernissen der Weiterbearbeitung angepasst sein. Es können weitere Temperierstationen 28 und Imprägnierstationen 29 vorgesehen sein, um beispielsweise nach der Neubeschlichtung auch eine oder mehrere Beschichtungen, etwa mit einer Fasermatrix zur Herstellung von Prepregs oder Formlingen, mit optimal temperiertem Carbonfaserstrang 2 durchzuführen. In einigen Fällen mag die Entfernung der Schlichte des Anlieferungszustands nicht erforderlich sein. Somit kann zusätzlich oder anstelle der Erwärmung auf die Zersetzungstemperatur Tz eine Erwärmung auf die Erweichungstemperatur Tw bzw. Schmelztemperatur Ts einer Faserbeschichtung (Imprägnierung) vorgesehen sein, um die nachfolgende Verarbeitung zu erleichtern. Es ist auch denkbar, nach einer Imprägnierung eine Erwärmungsstufe zur Trockung der Fasern vorzusehen.

Ohne Beschränkung der Allgemeinheit kann für Polyamid-Beschichtungen von einer Schmelztemperatur Ts $\cong$ 250°C, bei Hochtemperaturpolymerbeschichtungen von Ts $\cong$ 360°C ausgegangen werden. Zur Vorbereitung der Laminierung kann es sinnvoll sein, von einer Erweichungstemperatur Tw weit unterhalb dieser Werte auszugehen. Ohne Beschränkung der Allgemeinheit kann die Zersetzungstemperatur Tz der Schlichte bis zu 400°C betragen.

<Heizvorrichtung mit Schleifkontaktierung>

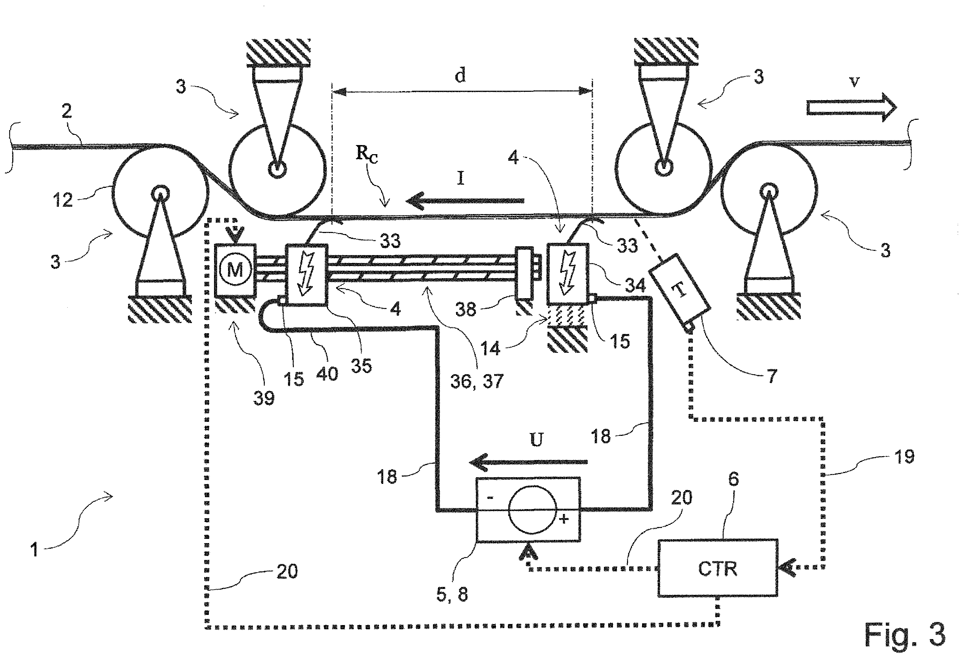

Fig. 3 zeigt eine weitere Heizvorrichtung 1 für die Durchführung eines Verfahrens gemäß der vorliegenden Erfindung in einer schematischen Darstellung. Das vorliegende Ausführungsbeispiel ist eine Abwandlung des Ausführungsbeispiels von Fig. 1, sodass auf die diesbezüglichen Beschreibungen vollumfänglich verwiesen wird, soweit die nachstehende Beschreibung der Abweichungen dem nicht entgegensteht.

Bei diesem Ausführungsbeispiel wird der Carbonfaserstrang 2 über zwei Paare von stromlosen Führungselementen 3 geführt, um eine freie Faserstrangstrecke mit einer definierten Vorspannung bereitzustellen. Obschon nicht näher dargestellt, kann wenigstens eines der Führungselemente 3 zur Aufbringung einer definierten Spannkraft auf den Carbonfaserstrang 2 ausgebildet sein, indem beispielsweise die zugehörige Umlenkrolle 12 federnd aufgehängt ist.

Die beiden Kontaktierungselemente 4 weisen abweichend von dem ersten Ausführungsbeispiel keine Kontaktrollen, sondern Schleifkontakte 33 auf, deren Abstand dem Kontaktabstand d entspricht.

In einem Fall (rechtes Kontaktierungselement 4 in der Figur) ist der Schleifkontakt 33 in einem Festgehäuse 34 aufgenommen, das über eine Isolierung 14 an oder in einem nicht näher bezeichneten Gerätegestell oder -gehäuse befestigt ist. Über einen Stromanschluss 15 des Kontaktierungselements 4 ist der Schleifkontakt 33 mit einem Pol der Spannungsquelle 5 verbunden.

Das andere (in der Figur linke) Kontaktierungselement 4 weist ein Läufergehäuse 35 auf, in welchem ein weiterer Schleifkontakt 33 aufgenommen ist. Das Läufergehäuse 35 ist in zwei parallel angeordneten Gleitschienen 36 verschieblich gelagert und stützt sich an einer Spindel 37 ab. Die Gleitschienen 36 und die Spindel 37 sind durch nicht näher dargestellte Mittel, wie etwa Führungselemente aus PTFE oder einem anderen isolierenden Material, gegenüber dem Schleifkontakt 33 elektrisch isoliert. Die Gleitschienen 36 und die Spindel 37 sind auf einer (freien) Seite in einem Lagerbock 38 gelagert. An einem anderen (angetriebenen) Ende sind die Gleitschienen 36 an einem Gehäuse eines Stellantriebs 39 befestigt. Der Stellantrieb 39 weist einen Elektromotor, insbesondere Schrittmotor, auf, der die Spindel 37 antreibt. Bei Betätigen des Stelltriebs 39 dreht sich die Spindel 37 und verschiebt das Kontaktierungselement 4 auf den Gleitschienen 36. Auf diese Weise kann der Kontaktabstand d zwischen Kontaktpunkten der Gleitkontakte 33 variiert werden. Über einen Stromanschluss des Kontaktierungselements 4 ist der Schleifkontakt 33 mit einem Pol der Spannungsquelle 5 verbunden, wobei das zugehörige Anschlusskabel 18 auf der Seite des beweglichen Kontaktierungselements 4 in einer Schleife 40 gelegt ist bzw. in einer Gliederkettenführung geführt ist.

Die Gleitkontakte 33 sind federnd ausgebildet, um einem durch eine Spannung des Carbonfaserstrangs 2 vorgegebenen Verlauf des Carbonfaserstrangs 2 in gewissen Grenzen folgen zu können.

<Steuerungskriterien>

Zur Ableitung geeigneter Steuerstrategien wird die Erwärmung des Carbonfaserstrangs 2 im Zusammenhang mit den relevanten Auslegungsparametern zunächst formelmäßig erfasst.

Der in dem Carbonfaserstrang 2 fließende Strom I hängt unter anderem von einem ohmschen Widerstand Rc des (freien Teils des) Carbonfaserstrangs 2 ab. Es gilt das Ohmschen Gesetz

$$(1) \quad U = R_C \times I$$

oder

$$(2) \quad I = U / R_C.$$

Der ohmsche Widerstand Rc kann aus der Definition des spezifischen Widerstand

$$(3) \quad \rho_{el} = R \times A / L$$

errechnet werden, wobei A die Querschnittsfläche aller Filamente des Carbonfaserstrangs 2 angibt, L die Länge des Leiters, die mit der freien Länge d gleichgesetzt werden kann

$$((4) \quad L = d),$$

angibt. Damit ergibt sich der Widerstand des Carbonfaserstrangs 2 zu

$$(5) \qquad\qquad R_C = \rho_{el} \times d / A.$$

D.h. es gilt

$$(6) \qquad\qquad I = A / \rho_{el} \times U / d.$$

Wenn z die Anzahl von Einzelfilamenten in einem Roving, n die Anzahl von Rovings zur Bildung des Carbonfaserstrangs 2, und df der Filamentdurchmesser jedes Einzelfilaments in einem Roving ist, ergibt sich die Gesamtquerschnittsfläche zu $(7) \quad A = \pi/4 \times z \times n \times d_f^2$. Für übliche Rovings beträgt der Filamentdurchmesser $d_f = 5..8\ \mu m$ bei einer Filamentzahl von z = 1000..50.000. In einer Anlage werden beispielsweise n = 70..80 Rovingspulen zusammengeführt.

Die Erwärmung $\Delta T$ des Carbonfaserstrangs 2 hängt einerseits von der spezifischen Wärmekapazität c für Carbonfaser, der Masse m des zu erwärmenden Strangs und der eingetragenen Wärmeenergie $\Delta Q$ ab und kann gemäß der Definition der spezifischen Wärmekapazität

$$(8) \quad c = \Delta Q / (m \times \Delta T)$$

durch die Beziehung $(9) \quad \Delta T = \Delta Q / (m \times c)$ angegeben werden. Die Masse m ergibt sich aus der Definition des spezifischen

Gewicht (Massendichte) $\rho_m$ zu

$$(10) \; m = \rho_m \times A \times d,$$

wobei A wieder die Querschnittsfläche und d die Kontaktlänge des Carbonfaserstrangs 2 ist.

Die in den Carbonfaserstrang 2 eingetragene Wärmemenge $\Delta Q$ kann als Produkt einer effektiven Heizleistung $P_{eff}$ und einer Stromflusszeit oder Kontaktzeit $\Delta t$ als $(11) \; \Delta Q = P_{eff} \times \Delta t$ ausgedrückt werden, wobei die Kontaktzeit $\Delta t$ sich mit dem Kontaktabstand d und der Abzugsgeschwindigkeit v zu

$$(12) \; \Delta t = d \,/\, v$$

ergibt. Somit gilt $(13) \; \Delta Q = P_{eff} \times d \,/\, v$. Unter der Annahme, dass die effektive Heizleistung $P_{eff}$ der elektrischen Leistung

$$(14) \; P_{el} = U \times I$$

mit einem Faktor $\eta_q$, der auch als Wärmeeintragswirkungsgrad bezeichnet werden kann, proportional ist, kann die eingetragene Wärmemenge durch die Gleichung

$$(15) \; \Delta Q = \eta_q \times U \times I \times d \,/\, v$$

angegeben werden. Schließlich ergibt sich die Erwärmung $\Delta T$ des Carbonfaserstrangs 2 aus Gleichung (9) durch Einsetzen der Gleichungen (15), (10) und (6) nach kurzer Umformung zu

$$(16) \qquad\qquad \Delta T = \eta_q \,/\, (\rho_{el} \times c \times \rho_m) \times U^2 \,/\, (d \times v).$$

In der vorstehenden Beziehung für die Erwärmung $\Delta T$ des Carbonfaserstrangs 2 enthält der erste Quotient nur konstante (oder temperaturabhängige) Materialwerte und Wirkungsgrade. Der zweite Quotient enthält Prozessparameter, die zur Steuerung der Erwärmung herangezogen werden können.

Dabei ist anzumerken, dass der Wärmeeintragswirkungsgrad $\eta_q$ auch von konstruktiv beeinflussbaren Gegebenheiten wie einer Wärmeableitung durch Konvektion (bewegte Luft, Frischluft), Wärmeabsorption oder -rückstrahlung durch umgebende Wände oder Bauteile, etc. abhängig ist und ggf., etwa durch eine Kapselung oder Belüftung, beeinflussbar ist. Ferner kann der elektrische Wirkungsgrad $\eta_{el}$ auch elektrische Leistungsverluste, Ladungsverluste am Übergang zwischen dem Carbonfaserstrang 2 und den Kontaktrollen 17 bzw. Schleifkontakten 33, statische Entladungsverluste etc. umfassen.

Aus vorstehender Gleichung (16) ergeben sich Anhaltspunkte für mögliche Steuerungsansätze:

- Den größten Einfluss auf die Erwärmung des Carbonfaserstrangs 2 hat eine Variation der Spannung U der Spannungsquelle 5, da die Temperaturerhöhung $\Delta T$ quadratisch von der Spannung U abhängt.

- Eine Vergrößerung des Kontaktabstands d bewirkt eine Verringerung der Erwärmung, da die Temperaturerhöhung $\Delta T$ umgekehrt proportional zu dem Kontaktabstand d ist.

- Eine Vergrößerung des Abzugsgeschwindigkeit v bewirkt ebenfalls eine geringere Erwärmung, da die Temperaturerhöhung $\Delta T$ auch zu der Abzugsgeschwindigkeit v umgekehrt proportional ist.

<Zahlenbeispiel>

Für die Auslegung der Stromversorgung ist es wichtig, die erforderlichen Spannungen und Stromstärken zu kennen. Zur einfachen Skalierbarkeit wird nachstehend eine Erwärmung um 100°C ($\Delta T$ = 100 K) für einen Carbonfaserstrang 2 (n=1) mit 1000 Einzelfilamenten (z=1000) von je df = 8 $\mu$m Durchmesser betrachtet. Es sei ferner angenommen, dass die Kontaktlänge d = 2 m und die Abzugsgeschwindigkeit v = 0,5 m/s beträgt.

Für eine Abschätzung der erforderlichen Spannung, um eine vorgegebene Temperaturerhöhung zu erzielen, kann die vorstehende Gleichung (16) nach U aufgelöst werden; sie wird dann zu:

(17) $$U = ((\rho_{el} \times c \times \rho_m) / (\eta_q \times \eta_{el}) \times \Delta T \times d \times v)^{\frac{1}{2}}.$$

Die Materialwerte für Kohlenstofffasern werden in der Literatur mit c = 710 J/(kg K), $\rho_{el}$ = 16 $\Omega$ mm$^2$/m und $\rho_m$ = 1,8 g/cm$^3$ angegeben (Wikipedia-Eintrag "Kohlenstofffaser", Abruf am 10.03.2013).

Damit ergibt sich aus Gleichung (17) für eine Erwärmung um 100°C (= 100 K) eine erforderliche Spannung von

$$U_{100} = [(16 \ \Omega \ mm^2/m \times 710 \ J/(kg \ K) \times 1,8 \ g/cm^3) / (\eta_q \times \eta_{el}) \times 100 \ K \times 2 \ m \times 0,5 \ m/s]^{\frac{1}{2}}$$

$$U_{100} = [\eta_q \times \eta_{el}]^{-\frac{1}{2}} \times [(16 \times 10^{-6} \times 710 \times 1,8 \times 10^{-3}/10^{-6} \times 100 \times 2 \times 0,5]^{\frac{1}{2}}$$

$$\times [\{(kg \ m^2 / (A^2 \ s^3)) \times (m^2 / m)\} \times \{(kg \ m^2) / s^2) / (kg \times K)\} \times kg \ /m^3 \times K \times m \times (m / s)]^{\frac{1}{2}},$$

also etwa

$$U_{100} = (\eta_q \times \eta_{el})^{-\frac{1}{2}} \times 45 \ V.$$

Mit Gleichungen (6) und (7) ergibt sich dann die erforderliche Stromstärke zu

(18) $$I = \pi/4 \times (z \times n \times d_f^2 / \rho_{el}) \times U / d.$$

Mit den oben genannten Zahlenwerten ergibt sich für eine Erwärmung um 100°C je 1000 Einzelfilamente mit der größten angegebenem Filamentstärke (8 $\mu$m) aus Gleichung (18) ferner eine Stromstärke von etwa

$$I_{100/1000} = \pi/4 \times (100.000 \times (8\mu m)^2 / 16 \ \Omega \ mm^2/m) \times (\eta_q \times \eta_{el})^{-\frac{1}{2}} \times 45 \ V / 2 \ m$$

$$= \pi/4 \times (100.000 \times 64 \times 10^{-12} / (16 \times 10^{-6}) \times (\eta_q \times \eta_{el})^{-\frac{1}{2}} \times 45 / 2$$

$$\times [m^2 / ((kg \ m^2) / (A^2 \ s^3) \times m^2/m) \times ((kg \ m^2) / (A \ s^3)) / m],$$

also etwa

$$I_{100/1000} = (\eta_{el} \times \eta_q)^{-\frac{1}{2}} \times 0,07 \ A.$$

Somit wäre zur Erwärmung von 1000 Einzelfilamenten von je 8 $\mu$m Durchmesser um 100 K eine elektrische Leistung von

$$P_{100/1000} = U_{100} \times I_{100/1000} = (\eta_{el} \times \eta_q)^{-1} \times 3,2 \ W$$

zu erbringen.

Es versteht sich, dass die vorstehende Ableitung auf einer Analogie zum statischen Fall einer konstanten Bestromung eines stationären Leiters für eine festgelegte Stromflusszeit beruht, dynamische Effekten und sonstige Randbedingungen nicht berücksichtigt und daher nur für qualitative Betrachtungen geeignet ist.

Beispielsweise wäre für genaue Rechnungen insbesondere für den spezifischen Widerstand $\rho_{el}$ noch eine Temperaturabhängigkeit zu berücksichtigen, die durch die Beziehung

(19) $$\rho_{el}(T) = \rho_{el}(T_0) \times (1 + \alpha \times (T - T_0))$$

mit $\alpha$ = -0,2 / 1000, $T_0$ = 20°C (für Kohlenstoff) ausgedrückt werden kann (Wikipedia-Eintrag "Spezifischer Widerstand", Abruf am 10.03.2013).

Die Erfindung, die durch die Ansprüche definiert ist, wird durch das oben dargestellte Formelwerk und die daraus ermittelten Zahlenangaben nicht einschränkt.

<Weitere Abwandlungen>

Die Erfindung wurde vorstehend anhand bevorzugter Ausführungsbeispiele, - varianten, -alternativen und Abwandlungen beschrieben und in den Figuren veranschaulicht. Diese Beschreibungen und Darstellungen sind rein schematisch und schränken den Schutzumfang der Ansprüche nicht ein, sondern dienen nur deren beispielhafter Veranschaulichung. Es versteht sich, dass die Erfindung auf vielfältige Weise ausgeführt und abgewandelt werden kann, ohne den Schutzumfang der Patentansprüche zu verlassen.

So kann die Spannungsquelle 5 auch eine Wechselspannungsquelle sein.

Der Stellantrieb 39 in dem dritten Ausführungsbeispiel kann auch auf andere Weise ausgebildet sein, etwa als Hydraulikzylinder oder als Ritzel mit Zahnschiene, wobei der Ritzelantrieb auf dem Läufergehäuse 35 angeordnet wäre.

Zur Realisierung unterschiedlicher Kontaktierungswege können auch mehr als zwei Kontaktierungselemente 4, die den Karbonfaserstrang 2 wahlweise an unterschiedlichen Stellen kontaktieren können, vorgesehen sein.

**Bezugszeichenliste**

| | |
|---|---|
| 1 | Heizvorrichtung |
| 2 | Carbonfaserstrang |
| 3 | Führungselement |
| 4 | Kontaktierungselement |
| 5 | Spannungsquelle |
| 6 | Steuereinheit |
| 7 | Temperatursensor |
| 8 | Spannungsteilerschaltung (Vorwiderstand) |
| 8a | fester Innenwiderstand |
| 8b | variabler Reihenwiderstand |
| 8c | variabler Parallelwiderstand |
| 9 | Lagerbock |
| 10 | Befestigung |
| 11 | Lager |
| 12 | Umlenkrolle |
| 13 | Gehäuse |
| 14 | Isolation/Befestigung |
| 15 | Anschluss |
| 16 | Lager |
| 17 | Kontaktrolle |
| 18 | Anschlusskabel |
| 19 | Messleitung |
| 20 | Steuerleitung |
| 21 | Carbonfaser-Vorbearbeitungsanlage |
| 22 | Spulstation |
| 23 | Abspulvorrichtung |
| 24 | Speicherstation |
| 25 | Pendelrollenspeicher |
| 26 | Faserspreizstation |
| 27 | Kalandereinheit |
| 28 | Temperierstation |
| 29 | Imprägnierstation |
| 30 | Imprägnierbad (Schlichtebad) |
| 31 | Abzugsstation |
| 32 | Antriebsvorrichtung |
| 33 | Festgehäuse |

| 34 | Schleifkontakt |
| 35 | Laufgehäuse |
| 36 | Gleitschiene |
| 37 | Spindel |
| 38 | Lagerbock |
| 39 | Stellantrieb |
| 40 | Kabelschlaufe (Gliederkettenführung) |

| c | spezifische Wärmekapazität |
| d | Kontaktabstand |
| df | Filamentdurchmesser |
| m | Masse |
| n | Anzahl der Rovings |
| $\Delta t$ | Kontaktzeit |
| v | Abzugsgeschwindigkeit |
| z | Anzahl der Einzelfilamente im Roving |

| A | Querschnittsfläche |
| I | elektrische Stromstärke |
| $I_{100/1000}$ | Stromstärke zur Erwärmung von 1000 Filamenten um 100°C |
| $P_{eff}$ | effektive Heizleistung |
| $P_{100/1000}$ | Elektrische Leistung zur Erwärmung von 1000 Filamenten um 100°C |
| $\Delta Q$ | Wärmemenge |
| Rc | Widerstand des Carbonfaserstrangs |
| Rv | Vorwiderstand |
| T | Temperatur (Endtemperatur) |
| $T_0$ | Bezugstemperatur |
| Ts | Schmelztemperatur der Faserschlichte/Imprägnierung |
| Tw | Erweichungstemperatur der Faserschlichte/Imprägnierung |
| Tz | Zersetzungstemperatur der Faserschlichte/Imprägnierung |
| $\Delta T$ | Temperaturdifferenz |
| U | elektrische Spannung |
| $U_{100}$ | Spannung zur Erwärmung um 100°C |

| $\alpha$ | linearer Widerstands-Temperaturkoeffizient |
| $\eta_{el}$ | elektrischer Wirkungsgrad |
| $\eta_q$ | Wärmeeintragswirkungsgrad |
| $\rho_{el}$ | spezifischer elektrischer Widerstand |
| $\rho_m$ | spezifische Dichte (Massendichte) |

Die vorstehende Liste ist integraler Bestandteil der Beschreibung.

**Patentansprüche**

1. Verfahren zur Erwärmung eines kontinuierlich geförderten Carbonfaserstrangs (2), **dadurch gekennzeichnet, dass** die Erwärmung durch Zuführung elektrischen Stroms (I) in den Carbonfaserstrang (2) erfolgt, wobei der Carbonfaserstrang (2) vor der Zuführung elektrischen Stroms (I) aufgespreizt wird, wobei die Erwärmung auf eine Temperatur (T) erfolgt, die wenigstens einer Erweichungstemperatur einer auf Fasern des Carbonfaserstrangs (2) befindlichen Schlichte oder Imprägnierung entspricht, und wobei die Erwärmung auf eine Temperatur (T) erfolgt, die wenigstens einer Zersetzungstemperatur einer auf Fasern des Carbonfaserstrangs (2) befindlichen Schlichte entspricht.

2. Verfahren nach Anspruch 1, **dadurch gekennzeichnet, dass** eine durch die Erwärmung erzielte Endtemperatur (T) des Carbonfaserstrangs (2) durch wenigstens eine der folgenden Maßnahmen gesteuert bzw. geregelt wird:

   - Variieren einer Spannung (U), unter welcher der elektrische Strom (I) zugeführt wird;
   - Variieren eines Vorwiderstands (Rv);
   - Variieren einer Abzugsgeschwindigkeit (v) des Carbonfaserstrangs (2);

- Variieren eines Abstands (d) von Stromzuführungspunkten.

**Claims**

1. Method of heating a continuously conveyed carbon fibre strand (2), **characterized in that** the heating is effected by supplying electrical current (I) to the carbon fibre strand (2), wherein the carbon fibre strand (2) is spread out before electrical current (I) is supplied, wherein the heating is effected to a temperature (T) corresponding at least to a softening temperature of a size or impregnation present on fibres of the carbon fibre strand (2), and wherein the heating is effected to a temperature (T) corresponding at least to a breakdown temperature of a size present on fibres of the carbon fibre strand (2).

2. Method according to Claim 1, **characterized in that** a final temperature (T) achieved by the heating in the carbon fibre strand (2) is subject to open-loop or closed-loop control by at least one of the following measures:

   - varying a voltage (U) under which the electrical current (I) is supplied;
   - varying a series resistance ($R_v$);
   - varying a draw-off speed (v) of the carbon fibre strand (2);
   - varying a separation (d) of current supply points.

**Revendications**

1. Procédé pour le chauffage d'un faisceau (2) de fibres de carbone transporté en continu, **caractérisé en ce que** le chauffage s'effectue par apport de courant électrique (I) dans le faisceau (2) de fibres de carbone, le faisceau (2) de fibres de carbone étant étalé avant l'apport de courant électrique (I), le chauffage s'effectuant à une température (T) qui correspond au moins à une température de ramollissement d'une imprégnation ou d'un ensimage se trouvant sur les fibres du faisceau (2) de fibres de carbone, et le chauffage s'effectuant à une température (T) qui correspond au moins à une température de décomposition d'un ensimage se trouvant sur les fibres du faisceau (2) de fibres de carbone.

2. Procédé selon la revendication 1, **caractérisé en ce qu'**une température finale (T) du faisceau (2) de fibres de carbone atteinte par le chauffage est commandée ou réglée par au moins l'une des dispositions suivantes consistant à :

   - faire varier une tension (U) sous laquelle est amené le courant électrique (I) ;
   - faire varier une résistance série ($R_v$) ;
   - faire varier une vitesse de tirage (v) du faisceau (2) de fibres de carbone;
   - faire varier un écartement (d) des points d'apport de courant.

Fig. 1

Fig. 2

EP 2 994 560 B1

Fig. 3

**EP 2 994 560 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1217170 A
- US 20100074834 A1
- EP 1783252 A1

**In der Beschreibung aufgeführte Nicht-Patentliteratur**

- Thermoplastic Coating of Carbon Fibers. **D. D. EDIE ; G. C. LICKFIELD ; KOLLEGEN AUS DEN VERÖFFENTLICHUNGEN.** Advances in Thermoplastic Matrix Composite Materials, Philadelphia 1989 und dem Jahresbericht 1988 - 1989. Center for Advanced Engineering Fibers'', Clemson University
- Kohlenstofffaser. *Wikipedia-Eintrag,* 10. Marz 2013
- Spezifischer Widerstand. *Wikipedia-Eintrag,* 10. Marz 2013